# EUROPEAN PATENT APPLICATION

(11) **EP 0 819 932 A1**
(43) Date of publication of application: **21.01.1998**
(21) Application number: 96305197.4
(22) Date of filing: 16.07.1996
(51) Int. Cl.: G01N 21/55

(54) **Microscope with ATR facility**

(71) Applicant: PERKIN-ELMER LIMITED, Beaconsfield, Buckinghamshire HP9 1QA (GB)
(72) Inventor: Carter, Ralph Lance, Towersey, Tame, Oxon. 0X9 3QY (GB); Wells, Simon Adrian, Wendover, Buckinghamshire (GB); Clark, David Robert, Twickenham, Middx TW2 6RS (GB)
(74) Representative: Smith, Norman Ian

(57) **Abstract**

A system for acquiring IR data including an IR microscope with a motor driven stage (16) and an ATR crystal (38). The system includes a computer for controlling the relative position of the stage and crystal whereby after each measurement the crystal and stage are separated, their relative lateral position is adjusted and they are brought back into contact at a new measurement position. This system allows ATR measurements to be carried out on an automatic basis.

## Description

This invention relates to the control of microscopes with movable stages. The invention has particular application to the control of a microscope which is used in spectroscopy such as IR spectroscopy.

In the field of spectroscopy it is known to provide a microscope which can operate in conjunction with a spectrophotometer. Such apparatus are used to obtain infrared spectra of samples. A known microscope is the Perkin-Elmer FT-IR microscope which is described for example in an article by D.W. Shearing, E.F. Young and T.P. Byron entitled "An FT-IR microscope", published in American Laboratory, November 1990. Such a microscope includes a movable stage on which a sample to be investigated can be mounted. The microscope permits both visible observation of the sample and analysis of the sample by infrared radiation, either in a transmitting mode or a reflectance mode. The microscope also includes a video camera which can be used in conjunction with the visible viewing means in order to generate a video image of the sample for display on the display means of a computer.

The microscope can be used in conjunction with a spectrophotometer such as a Perkin-Elmer System 2000 FT-IR spectrophotometer. This instrument can receive infrared radiation either transmitted via the sample or reflected from the sample and provide an output indicating the spectrum of the sample.

The stage of the microscope is movable so that in an initial step it can be moved in an X-Y plane to appropriately locate the sample so that analysis of a selected part of the sample can be achieved.

In European Patent Application No. 95301428.9 we described a method and apparatus for facilitating positioning of the sample stage using images of the stage on a display means of a computer. That invention also provided a facility for enhancing display of acquired data.

A first aspect of the invention described in European Patent Application No. 95301428.9 concerned a method of controlling a motor driven stage of a microscope which has a video camera for viewing a sample on the stage, said method comprising creating on a display means of a computer coupled to the video camera an image of the sample, creating and superimposing on said image one or more graphical markers, using said marker or markers to create coordinate data identifying positions of interest on said sample and using said coordinate data subsequently to control the positioning of said stage.

A second aspect of that invention concerned a method of controlling a motor driven stage of a microscope which has a video camera for viewing a sample on said stage and an associated computer and display means for displaying a video image of an area viewed by said camera, said method comprising creating on said display means an image of an area of interest on said sample, storing data representative of said image, adjusting the position of said stage to identify another area of said sample and storing data representing that image, repeating said steps for a selected number of areas of said sample, combining said data to create an image of a larger area of said sample which is made up of said individual areas of interest, creating and superimposing on said larger area image one or more graphical markers, using said marker or markers to create coordinate data identifying positions on said sample, and subsequently using said coordinate data to control the positioning of said stage.

A third aspect of that invention concerned a system for controlling a motor driven stage of a microscope which has a video camera for viewing a sample on the stage, said system including a display means, and a computer for controlling said display means to create on said display an image of a sample on its microscope stage, said computer being arranged to create and superimpose on said image one or more graphical markers which can be used to create coordinate data identifying positions of interest which are used subsequently to position the stage for analysis of the sample.

A fourth aspect of that invention concerned a system for controlling a motor driven stage of a microscope which has a video camera for viewing a sample on the stage, said system including a display means and a computer for controlling the display to create on said display an image of an area of a sample on the microscope stage, said computer being arranged to store data representative of an image of the viewed area, to move the stage to another area and store data representative of that area, to repeat these steps for a selected number of areas and to combine the stored data to provide an image of the sample which is larger than the individual areas, said computer also being arranged to come to be displayed and superimposed on the larger area image one or more graphical members which are used to create coordinate data identifying positions of interest on the sample which can be stored and used subsequently to position the stage for analysis of the sample.

Microscopes of the above type can be used in a transmitting or reflecting mode. When poorly reflecting samples are analysed in the reflecting mode it is known to use what is called the attenuated total reflection (ATR) technique. In this, a crystal which utilises total internal reflection or attenuated total internal reflection, is located in contact with the sample during the analysis step. Contact between the sample and the crystal is usually maintained by the application of pressure.

The crystal can be mounted so that it can be moved out of contact with the sample in order to permit visual observation of the sample during a setting-up stage. In use, with the crystal in its removed position the sample is viewed e.g. through an optical microscope and the area of interest identified and positioned appropriately. The crystal is then brought into contact with the sample and then analysed with the microscope in its infrared mode.

A particularly useful ATR crystal is described in EPC Patent Application No. 95301402.4. This crystal comprises a crystal body which has an upper body portion through which analysing radiation can pass towards a sample to be analysed, and a generally conical lower part whose apex in use is in contact with the sample.

By means of such a crystal member it is possible to create a relatively small, flat surface at the apex of the cone to provide a known area of contact with the sample. Furthermore, because the area provided by the apex of the cone is relatively small the crystal can be used to develop a high pressure contact between the sample and crystal without increasing the area of contact.

EPC Application No. 95301402.4 also describes a mounting assembly for an ATR type crystal which comprises a frame having generally radially extending limbs attachable to an objective lens of an apparatus for carrying out spectroscopic analysis, an axially depending support element carried by said frame, said support element including first and second relatively movable members, the second of which carries on its lower end an ATR type crystal of the type defined above, and means biasing said second member to its lowermost position and means allowing movement of the second member upwardly against said bias means. This usually facilitates raising and lowering of the crystal between operative and non-operative positions.

Conventionally it is the practice to carry out ATR measurements at single points on a sample. This can be time consuming.

The present invention is concerned with an arrangement which enables ATR measurements to be carried out automatically a plurality of points on a sample.

According to a first aspect of the present invention there is provided a method of operating an IR microscope having an ATR facility so that it can carry out ATR measurements of a plurality of positions on a sample, said method comprising bringing an ATR crystal into contact with a sample, carrying out an ATR measurement at that position, separating the crystal and the sample, adjusting the relative lateral positions of the sample and crystal and bringing the sample and crystal back into contact, wherein during the step of bringing the crystal and sample back into contact a predetermined parameter is monitored and the relative position of the sample and crystal are adjusted on the basis of the monitored parameter.

The parameter may be the relative vertical position of the sample and crystal, the sample and/or crystal being returned to a vertical position corresponding to its position prior to the separation of the sample and the crystal. This technique can be used for perfectly flat samples.

Alternatively the parameter may be the intensity of the radiation reflected through the crystal, the sample being returned to a position in which the intensity corresponds to the intensity sense prior to the separation.

In a further alternative the parameter may be a spectral characteristic of the radiation reflected back through the crystal.

Another aspect of the present invention provides a system for acquiring IR data including an IR microscope with a motor driven stage and an ATR facility including an ATR crystal which in use is brought into contact with a sample on the stage in order to carry out an ATR measurement, said system including a computer for controlling movement of the stage in both a vertical and a horizontal direction, wherein when the microscope is set to carry out an ATR measurement, the ATR crystal is brought into contact with a sample on the stage and an ATR measurement is carried out that position, the computer on the basis of data previously stored therein, then causes movement of the stage so that the crystal and the sample are separated, the relative lateral position of the sample and crystal is adjusted, and the sample and crystal are brought back into contact at a new position, wherein during the step of bringing the crystal and sample back into contact a predetermined parameter is monitored and the stage controlled so that the relative position of the sample and the crystal is adjusted on the basis of the monitored parameter.

The parameter may be the relative vertical position of the stage and crystal and the computer may be arranged to provide signals to cause the stage and/or crystal to be returned to its position prior to the separation of the sample and crystal. Alternatively, the parameter may be the intensity of the radiation reflected back through the crystal, the microscope including a detector for sensing that radiation and the computer may be arranged to control movement of the stage such that the sample is returned to a position at which the intensity corresponds to the intensity sensed prior to the separation.

In a further alternative, the system may be arranged to sense a spectral characteristic of the radiation reflected back through the crystal.

The microscope may have a video camera for viewing a sample on the stage and the display means of the computer may be arranged to display a video image of that area viewed by the camera, the computer being arranged to control a display means to create on said display an image of the sample on the microscope stage and to create and superimpose on that image one or more graphical markers which can be used to create coordinate data identifying positions of interest which are used subsequently to position the stage for analysis of the sample. Thus, the positions at which an ATR measurement are to be carried out can be identified using the video image and the computer and coordinate data relating to those positions can be stored in the memory of the computer. Subsequently, the computer operates the stage automatically so that ATR measurements are carried out successively at each of the identified positions using the automatic technique define above.

The invention will be described now by way of example only, with particular reference to the accompanying drawings. In the drawings:
Figure 1 is a schematic view of an FT-IR microscope operating in accordance with the principles of the present invention;
Figure 2 is a side elevation showing the principal elements of FT-IR microscope;
Figures 3 and 4 are schematic views showing the ATR technique;
Figures 5a to 5c are respective plan, side and bottom views of an ATR crystal;
Figure 6 is a side view of a mounting assembly for an ATR crystal;
Figure 7 is a perspective view from below of the mounting assembly;
Figure 8 is an exploded view of the mounting assembly;
Figure 9 is a side elevation of the mounting with the crystal in its raised position;
Figure 10 is a schematic block diagram of a microscope assembly in accordance with an embodiment of the present invention;
Figures 11, 11a, 11b, 11c, 12 and 12a shows displays which can be generated on the display means of Figure 10;
Figure 13 shows a display of an acquired spectrum;
Figures 14a to 14d are flow charts of the software operating on the computer, and
Figures 15 to 18 are schematic views illustrating the operation of a microscope in accordance with the present invention.

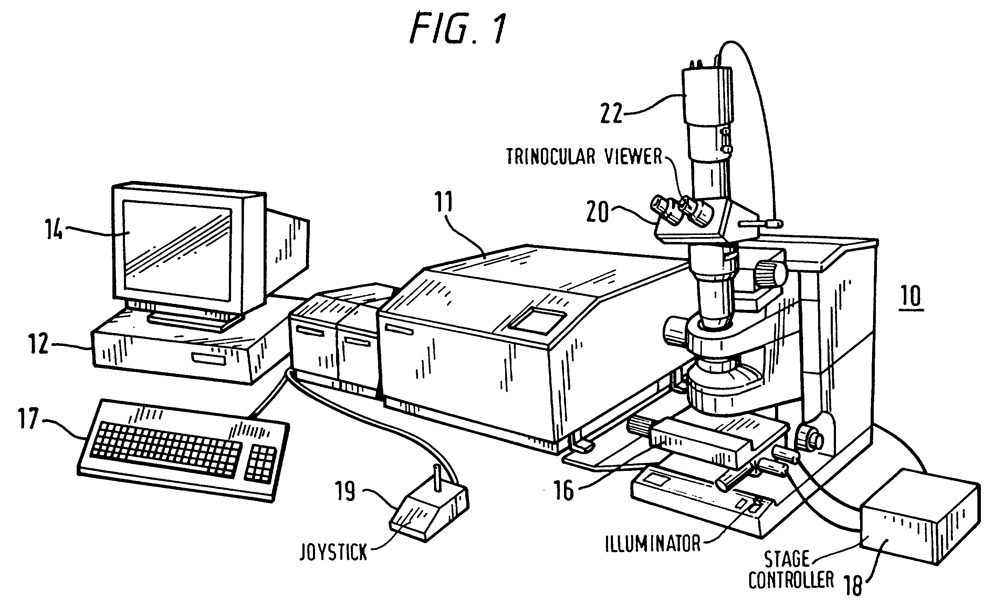

The invention will be described specifically with reference to an FT-IR microscope used in conjunction with an IR spectrophotometer. A basic arrangement is illustrated in Figure 1 of the drawings. It comprises a microscope (10), a spectrophotometer (11), a computer (12) with a display means (14), a keyboard (17) and joystick (19). The microscope includes a movable stage (16) which can be driven in X, Y and Z directions by means of a stage controller (18). The microscope also includes viewing means (20) for enabling the sample on the stage (16) to be viewed prior to an analysis step and also includes a video camera (22) which can be used to generate a video image of the sample stage.

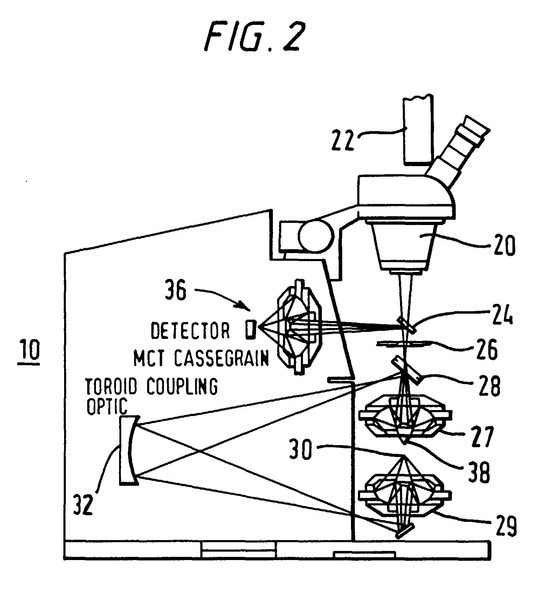

The microscope (10) can be an FT-IR microscope of the type manufactured by Perkin-Elmer Corporation. Such a microscope has a basic structure which is illustrated in Figure 2 of the drawings. The microscope includes the optical microscope (20), a view/IR mirror (24), a remote aperture (26), a transmittance/reflectance mirror (28), an objective Cassegrain lens assembly (27) and a condenser Cassegrain lens assembly (29) with the sample position (30) being located therebetween. The drivable stage (16) is located at the sample position. In addition, the microscope includes a toroid coupling optic (32) which is used to direct radiation towards the sample.

Alongside the view/IR slider there is provided a detector (36) of the MCT type which can provide data in response to received infrared radiation which is fed to the spectrophotometer for analysis. It is not necessary for the purposes of the present invention to describe the microscope in any more detail since its function will be apparent to those skilled in the art. A fuller description can be found in the manual of The Perkin-Elmer FT-IR microscope and also in the previously referred to article entitled "An FT-IR microscope" published in American Laboratory of November 1990.

In operating such an arrangement a sample is placed upon the movable stage (16) and the first step is to position the sample prior to analysing it by irradiating it with infrared radiation. The sample is positioned by viewing it either optically through the microscope (20) or on the display means (14) using the video camera (22), or both. Once the stage has been positioned appropriately, then a selected area of the sample can be analysed by obtaining an infrared spectrum. Areas of interest are identified on the sample using the display means (14) and subsequently the stage is controlled during an analysis step to enable those areas of interest to be analysed automatically.

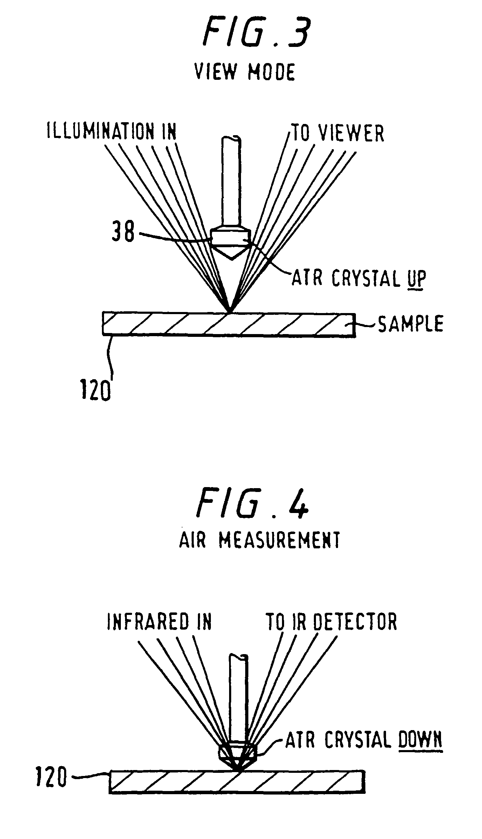

It will be appreciated that the microscope can be used in a transmission or a reflection mode. When a poorly reflecting sample is under investigation it is known to make use of an ATR crystal which is supported intermediate the objective Cassegrain (27) and the sample. Figures 3 and 4 are views illustrating the position of the ATR crystal (38) during sample viewing (Figure 3) and during an actual analysis measurement (Figure 4). During the analysis measurement the crystal is in contact with the sample and the basic principles upon which the crystal operates will be appreciated by those skilled in the art.

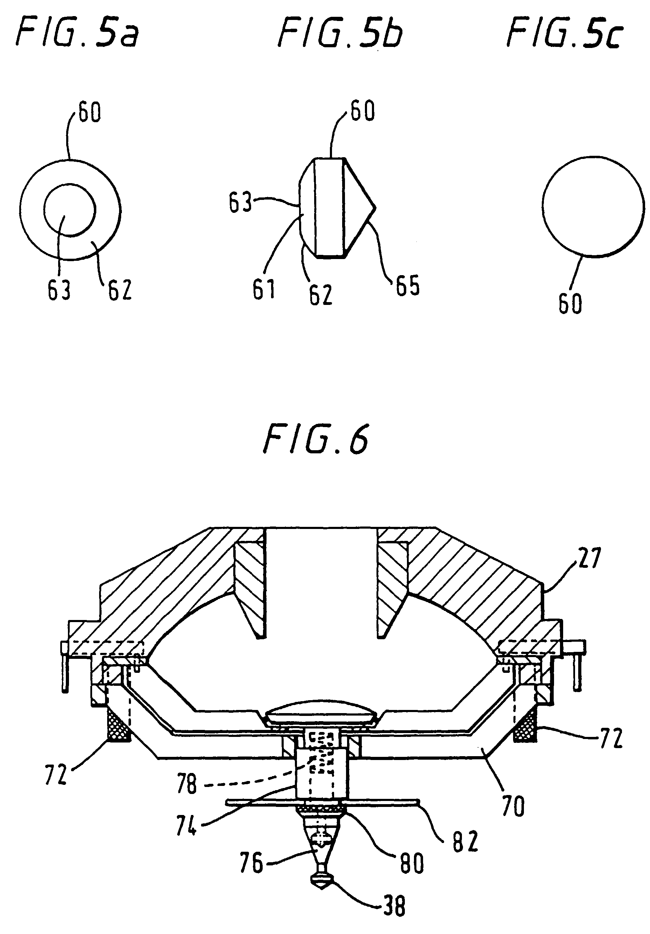

A particular form of crystal is shown in Figures 5a to 5c. The crystal comprises a cylindrical intermediate portion (60), an upper portion (61) having a part spherical surface (62) and a flat top (63) and a lower generally conical portion (65). The crystal typically is formed from a material which transmits infrared radiation, e.g. germanium or silicon. Approximate dimensions of the crystal are as follows. The radius of the intermediate portion (60) is of the order of 2mm, the total axial extent of the crystal is of the order of 3mm and the apex (66) of the cone is formed with a small flat surface whose dimensions are typically 100 microns, but can be in the range of approximately 50 microns to 200 microns.

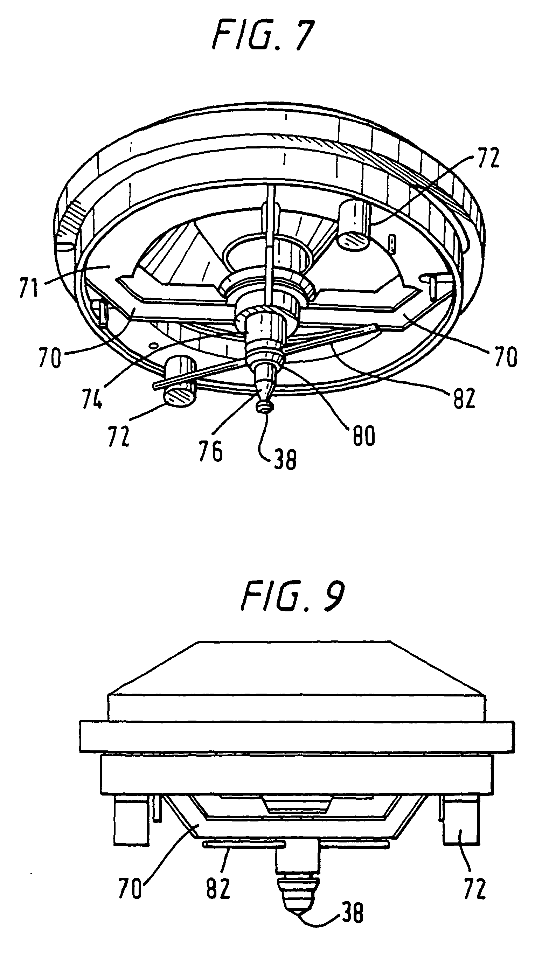

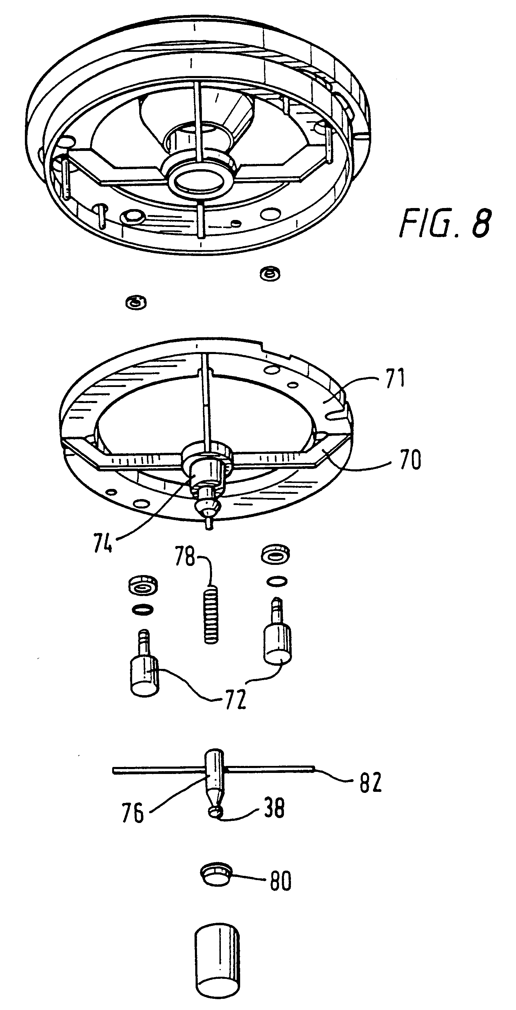

The crystal (38) can be incorporated into a mounting assembly of the type shown in Figures 6 to 9 of the drawings. This assembly is connected to the Cassegrain assembly (27). The mounting assembly includes a frame structure having radially extending limbs (70) connected to a ring (71), the frame structure being coupled to the Cassegrain objective at angularly spaced peripheral positions by means of screw connectors (72). At a central position the frame structure supports a downwardly extending mounting assembly which comprises an outer tubular member (74) within which is located an axially movable member (76). The axially movable member has a tapering lower portion which carries at its lower extremity the crystal (38) shown in Figure 5. A spring (78) is located within the tubular member (74) and acts to bias the inner member downwardly. A nut (80) engages the outer threaded portion of the second member and can be used to adjust the axial position of the crystal. The crystal can be raised and lowered by means of a manually operable toggle bar (82) which can be manually operated to move the second member upwardly or downwardly.

The inner and outer members (74 and 76) are coupled by a bayonet type coupling in which a radially outwardly projecting pin on the inner member (76) engages in a slot in the outer member (76). To move the crystal to an upper position the toggle is pushed upwardly to move the member (76) upwardly against the spring bias. The toggle bar is then twisted so that bayonet connection maintains that position in a manner similar to a light bulb connection. To lower the crystal the toggle bar (82) is twisted to release the bayonet connection and the member (76) can then fall to its lower position.

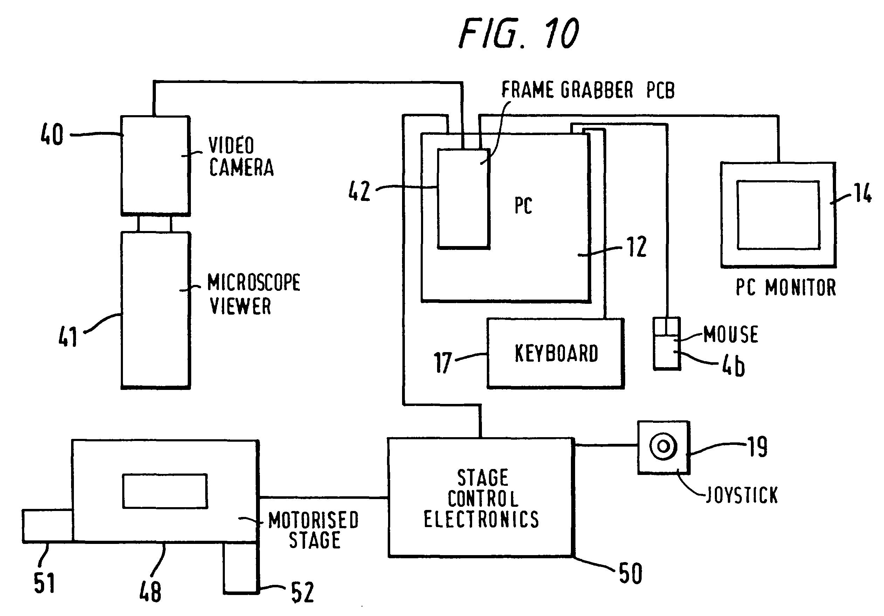

The system will be described now with reference to Figure 10 of the drawings, which is a schematic block representation of an embodiment of the invention. In Figure 10 the video camera is shown at (40) and operates in conjunction with the microscope viewer which is illustrated at (41). The video camera is connected to a circuit board (42) of the computer (12), that circuit board providing the computer (12) with the capability of controlling the display means to display a video image of the movable stage (16). The circuit board (42) is a commercially available board known as a frame grabbing card. Associated with the computer is the keyboard (17) and a pointer control, typically a mouse, (46). The motorised stage is shown at (48) and operates in conjunction with stage control electronics (50) which are coupled to the computer (12). Associated with the electronics (50) is the joystick (19) which enables an operator to manually control movement of the movable stage (48). The stage (48) includes motors (51, 52) for driving the stage in an X-Y plane. The stage also includes a further motor (not shown) for movement along the Z-axis (i.e. vertically).

In the following description it will be assumed that the software is operating in a Windows environment but it will be appreciated that the invention is not restricted to such an example. The computer (12) is thus one which can operate the Windows operating system.

Initially the microscope (20) is used to view the sample on the stage and also an image of a portion of the sample is generated on the display means (14) using the video camera (12). The stage (16) can be controlled electronically through the controller (18) either by use of the joystick controller (19) or in response to commands generated by the computer (12). Briefly the video camera (12) samples the image and transmits electronic data to the frame grabbing card (42) of the computer and this data is processed and used to generate a display which is a live video image of the sample. In addition the software stored in the computer can superimpose graphical images on the image of the sample.

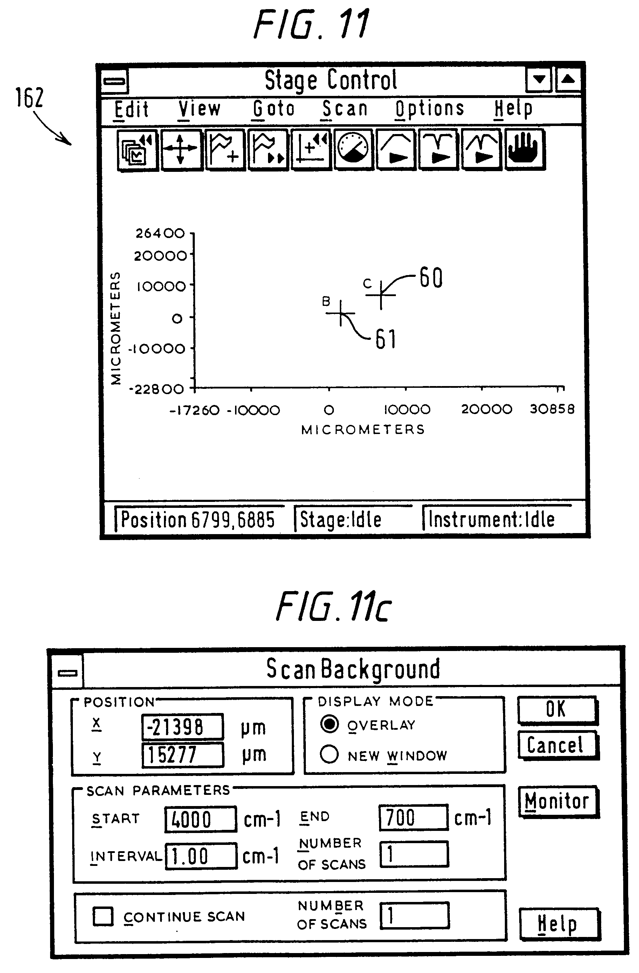

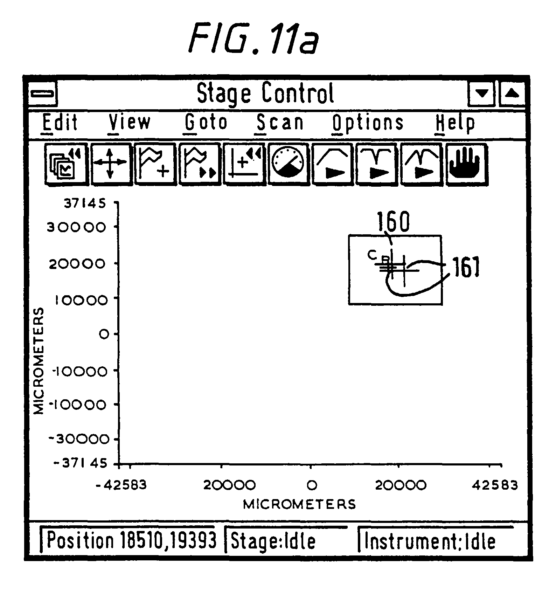

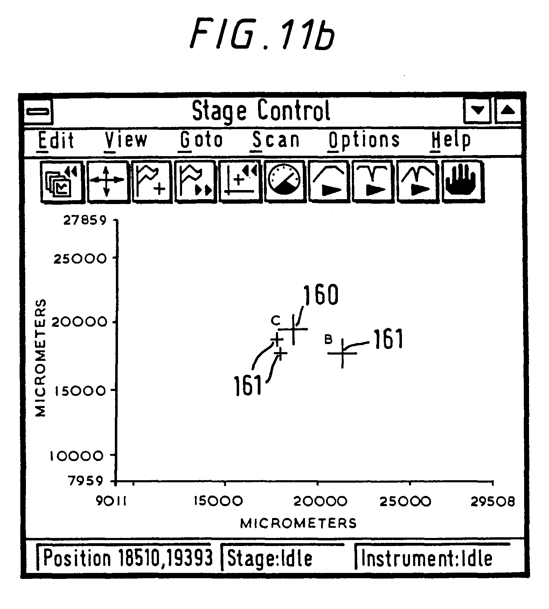

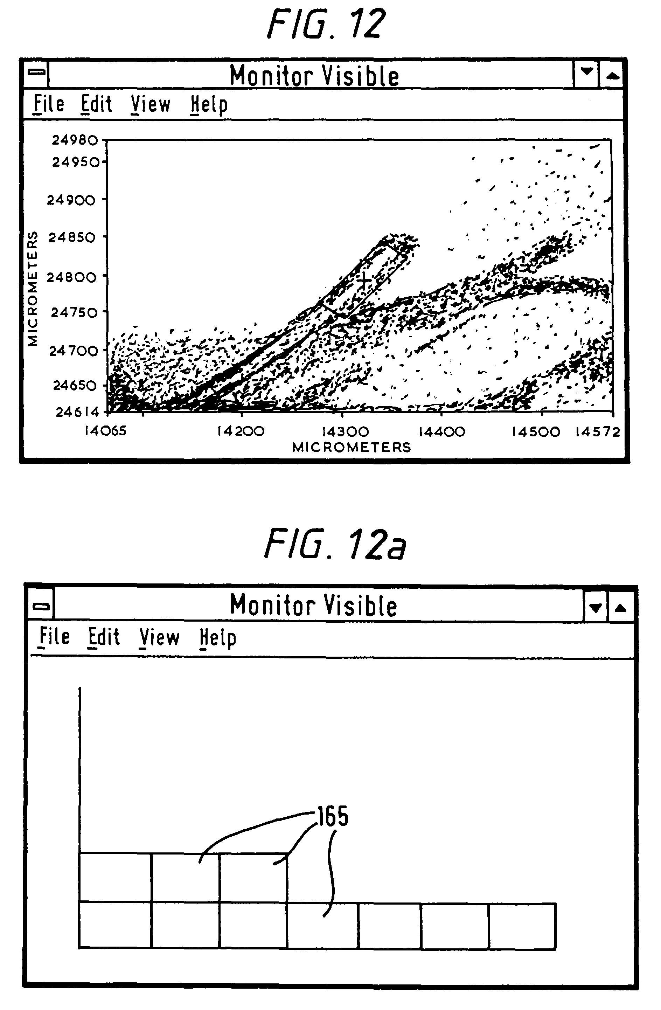

Figures 11 and 12 show typical displays which can be created. The first display is known as a stage control window which enables an operator to adjust the position of the sample stage. As can be seen, the display includes markers (160 and 161). The marker (160) is a current aperture marker which shows the position on the sample stage of the microscope aperture. It can be used to move the sample stage to different positions without using the joystick. In order to do this the mouse is controlled to move the mouse pointer close to the marker (160). The marker (160) is then dragged across the display by moving the mouse position. The sample stage is then moved by the stage control electronics (50) to a position corresponding to the repositioned pointer (160). It will be appreciated that the stage can be continuously repositioned using this procedure. The display shown in Figure 11 also includes a tool bar facility (162) which comprises a number of icons selectable using the mouse.

Figure 12 shows an example of a display which is a video image of an area of the sample itself. The computer is programmed so that markers can be superimposed on the image of the sample and moved around the sample by means of a pointer control, typically the mouse. In use of the apparatus a sample to be analysed is placed on the sample stage of the microscope. The sample stage is positioned roughly by moving the stage with the joystick control. This positioning can be carried out visually.

The two displays (Figure 11 and Figure 12) are then viewed on the display means simultaneously. An operator identifies on the Figure 12 Window an area of interest and using the current stage position marker (160), as described above, moves the stage until that area is centred on the display. Then by using the mouse control buttons the operator marks the area of intent and this produces a marker (161) which does not subsequently move relatively to the area it identifies. The display can also display the coordinates of the marked position as indicated by (164) in Figure 11. Those coordinates are also in the computer memory.

The software then allows an operator to move to another area of interest using the marker (160) as described above and to store in a similar manner data representative of the coordinates of that point of interest. This process can be repeated for as many areas of interest as necessary and coordinate data relating to those areas of interest are stored in the computer memory. For each area of interest a marker (161) will appear on the display. Figure 11a shows a display with a number of marked points (161). Figure 11a also shows how a box can be drawn around the points under the control of a mouse and then that area defined by the box is expanded to create another Window (Figure 11b) with the points displayed on a different scale.

The software for the above operation operates generally as follows. The software continuously polls the stage control electronics (50) for the current stage position. This software has been precalibrated with camera image size information and is then able to calculate the stage coordinates of any point on the live video image displayed on the display means (14). Once the feature on the sample is visible in the display it can be rapidly centred by pointing at it using the mouse, as explained above. The software then calculates the coordinates and causes the stage (16) to move to them. The current centre of view is marked with a small computer generated marker. As the stage is moved this marker is repositioned so as to remain with the feature it is marking. This is repeated for each point of interest to be defined.

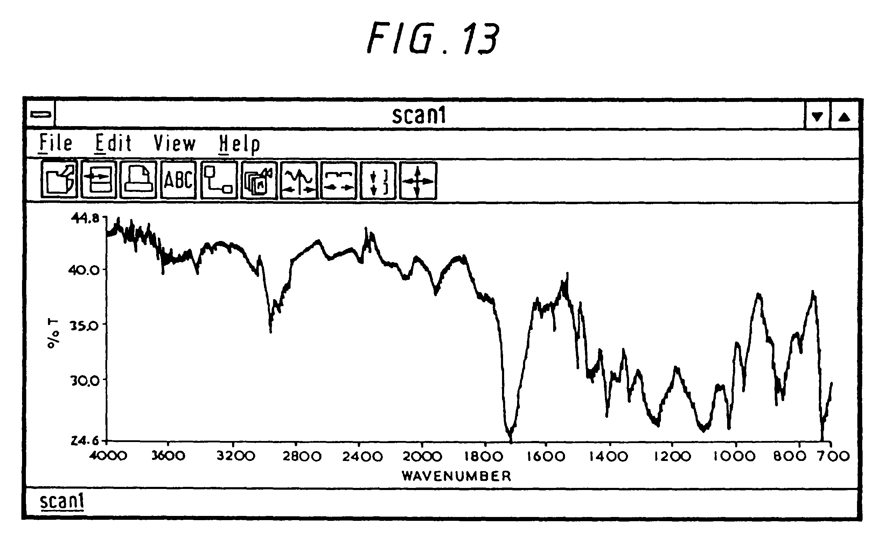

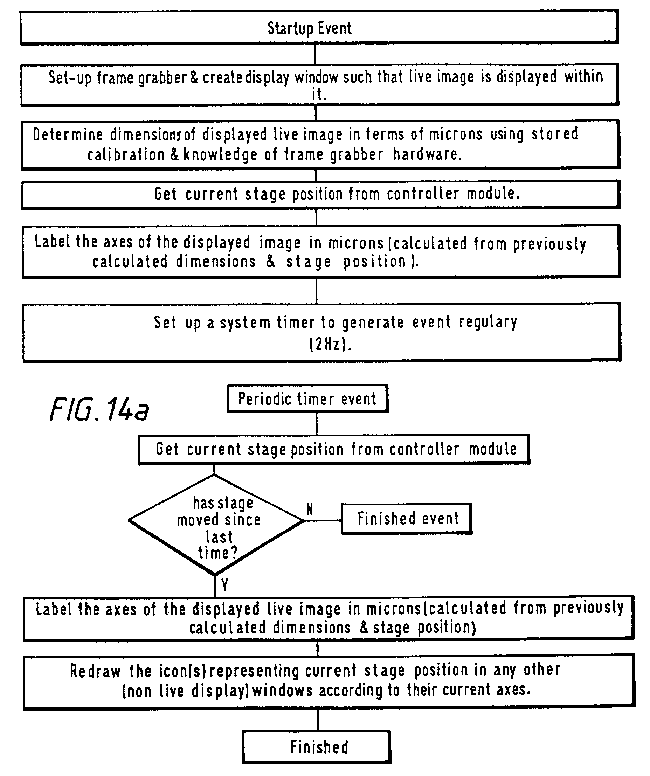

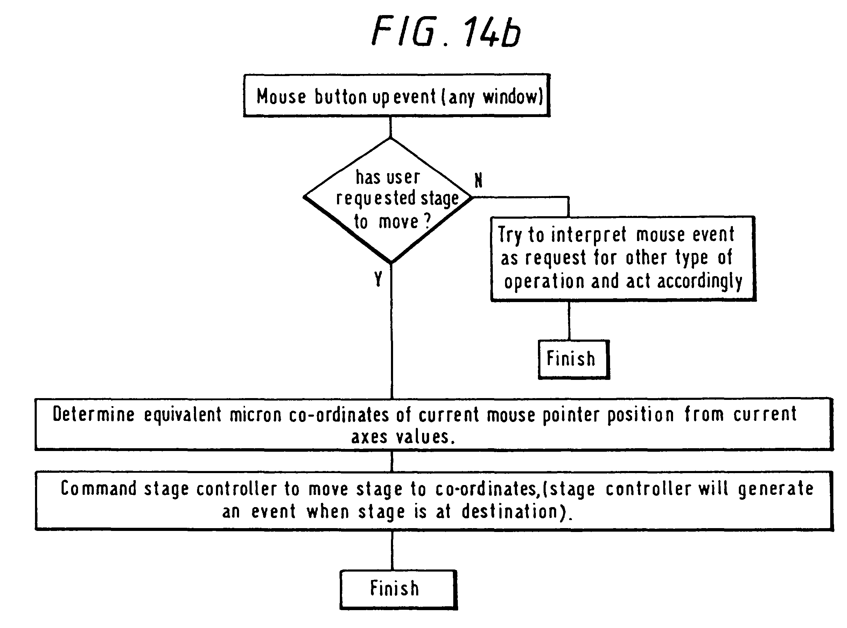

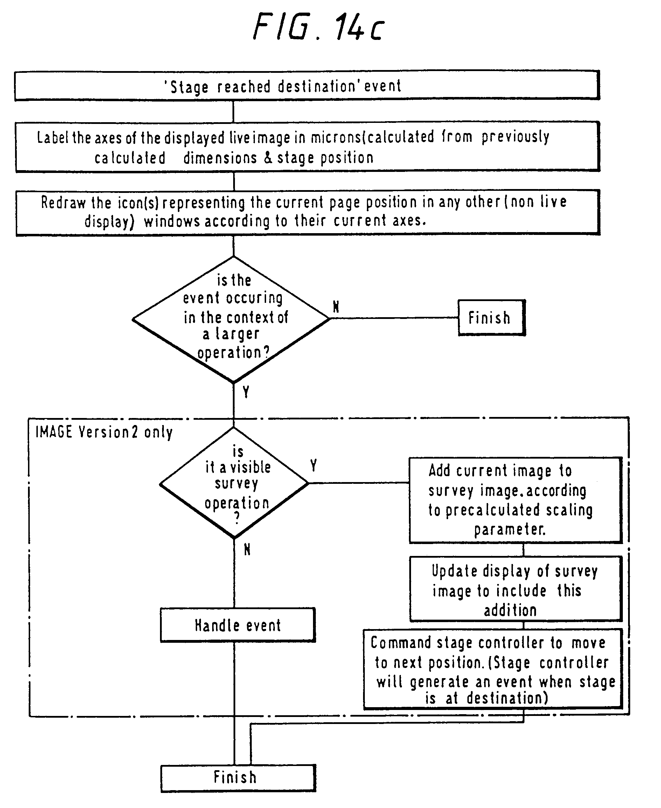

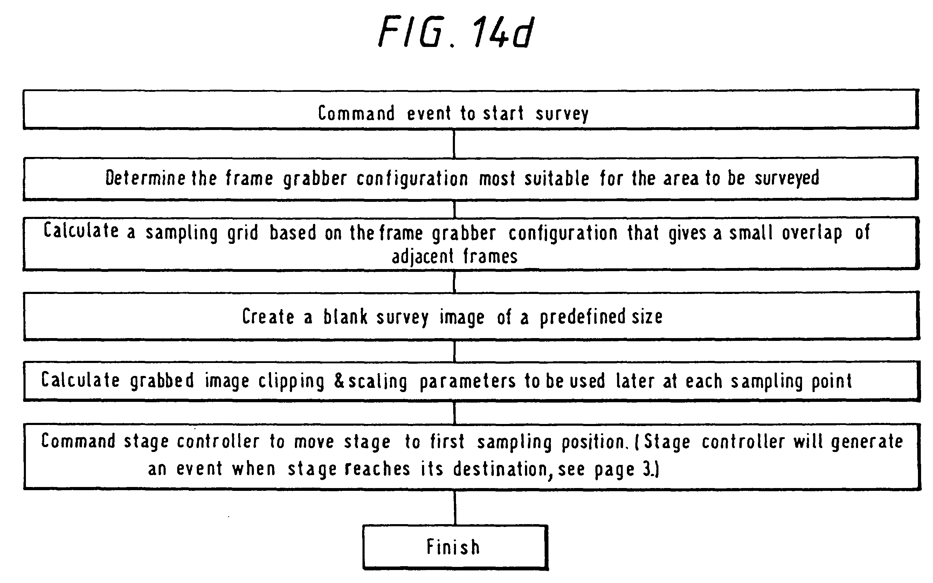

Subsequently the software is used to control automatically the acquisition of analysis data for each of the points of interest during an infrared scanning operation. In setting up for spectra acquisition an operator is presented with a Window of the type shown in Figure 11c. This enables the operator to set up the scan parameters. This particular Window has been designed for use with the Paragon 1000 instrument. In the acquisition of spectra operation the stage is moved automatically to positions corresponding to the stored coordinate data, i.e. the positions identified by markers (161). At each position the sample is scanned with infrared radiation in the usual manner and a spectrum acquired by the spectrophotometer. These spectra can be displayed on the display means and Figure 13 illustrates an example of such a display. Figure 14 is a flow chart representing the software which controls the operations described above.

Thus it will be seen that the above arrangement provides an operator with an ability to superimpose computer generated graphic markers on a live video image of a sample under investigation, these images being displayed on a display screen of a computer. The arrangement also enables an operator to define data representing the position of points of interest on the sample using the computer generated graphic markers and the live video image of the sample. Subsequently the coordinate data can be used during a scanning step to automatically position the sample stage (16) in order to acquire infrared spectral data for each of the points of interest identified by an operator. A further feature of the present arrangement is that the markers (161) enable an operator to return the stage easily and accurately to a position at which a marked point on a sample can be viewed again.

It will be appreciated that the above description relates to the operation of the microscope and its associated equipment in the non-ATR mode. When carrying out ATR measurements areas of interest can be identified in substantially the manner described above for non-ATR mode. Thus, coordinate data for those areas of interest are stored in the computer substantially as described above.

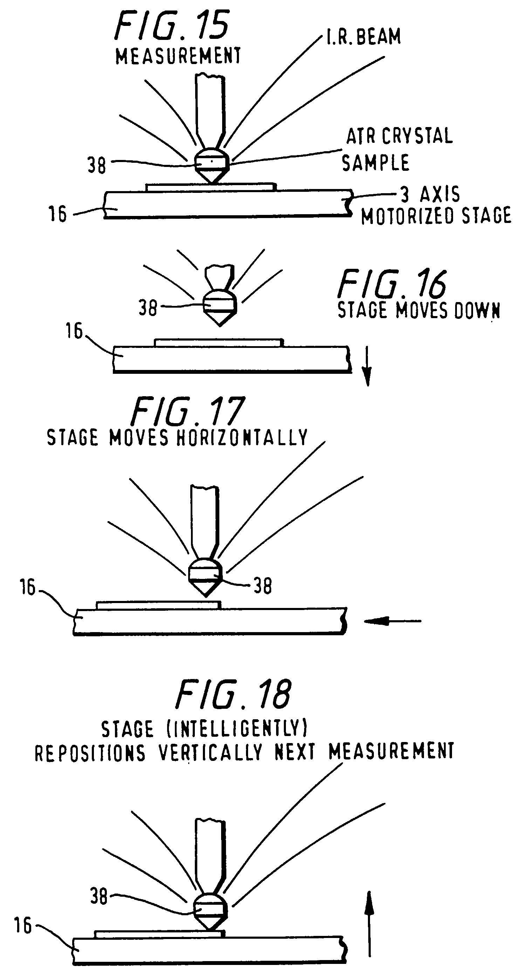

In order to put the microscope in its ATR mode the crystal supported from its mounting on the Cassegrain lens (27) is lowered so that it comes into contact with the sample as illustrated in Figures 4 and 15 of the drawings. An ATR measurement is then carried out at that point on the sample by irradiating the sample through the crystal and sensing the radiation reflected back through the crystal from the sample. This will not be described in detail since it will be known to those skilled in the art. When the ATR measurement has been made at the first identified position the computer then operates to automatically move the stage (16) downwardly as illustrated in Figure 16, to move the stage laterally as illustrated in Figure 17 so that the second position stored in the computer is effectively under the point of the crystal and finally the computer operates to move the stage upwardly and to reposition it at the same vertical position that the stage occupied prior to the separation. This final step is illustrated in Figure 18. A further ATR measurement is carried out at that position. This process can be repeated for each of the positions identified and stored in the computer.

Thus, the above represents a technique for carrying out automatically a series of ATR measurements at areas of interest on a sample. It will be appreciated that it is not always necessary to identify the areas of interest visually using the video camera. It is possible to carry out a mapping technique in which measurements are carried out at specified points on a grid, the stage being moved substantially as described above under computer control to each position on the grid and an ATR measurement carried out at each position on the grid.

In the arrangement described above it will be seen that returning the stage to a position at which the next ATR measurement can be carried out is achieved by monitoring the vertical position of the stage. A similar result could be achieved by moving the crystal. This technique is satisfactory for relatively flat samples, but it is envisaged that other parameters can be used to control the return of the stage to its optimum position. For example, it would be possible to monitor the infra red radiation reflected back through the crystal (38) during upward movement of the stage to bring the sample into contact with the crystal. The computer could be arranged to sense the received radiation and to control the stage in such a way that it returned to a position at which the intensity of the radiation corresponded to the intensity of the radiation prior to the separation of the sample and the crystal.

Another parameter which could be used to control movement of the stage would be a spectral characteristic of the radiation as reflected back from the sample.

## Claims

1. A method of operating an IR microscope having an ATR facility so that it can carry out ATR measurements of a plurality of positions on a sample, said method comprising bringing an ATR crystal into contact with a sample, carrying out an ATR measurement at that position, separating the crystal and the sample, adjusting the relative lateral positions of the sample and crystal and bringing the sample and crystal back into contact, wherein during the step of bringing the crystal and sample back into contact a predetermined parameter is monitored and the relative position of the sample and crystal are adjusted on the basis of the monitored parameter.

2. A method according to claim 1, wherein the parameter is the relative vertical position of the sample and crystal, the sample and/or crystal being returned to a vertical position corresponding to its position prior to the separation of the sample and the crystal.

3. A method according to claim 1, wherein the parameter is the intensity of the radiation reflected through the crystal, the sample being returned to a position in which the intensity corresponds to the intensity sense prior to the separation.

4. A method according to claim 1, wherein the parameter is a spectral characteristic of the radiation reflected back through the crystal.

5. A system for acquiring IR data including an IR microscope with a motor driven stage and an ATR facility including an ATR crystal which in use is brought into contact with a sample on the stage in order to carry out an ATR measurement, said system including a computer for controlling movement of the stage in both a vertical and a horizontal direction, wherein when the microscope is set to carry out an ATR measurement, the ATR crystal is brought into contact with a sample on the stage and an ATR measurement is carried out that position, the computer on the basis of data previously stored therein, then causes movement of the stage so that the crystal and the sample are separated, the relative lateral position of the sample and crystal is adjusted, and the sample and crystal are brought back into contact at a new position, wherein during the step of bringing the crystal and sample back into contact a predetermined parameter is monitored and the stage controlled so that the relative position of the sample and the crystal is adjusted on the basis of the monitored parameter.

6. A system according to claim 5, wherein the parameter is the relative vertical position of the stage and crystal and the computer is arranged to provide signals to cause the stage and/or crystal to be returned to its position prior to the separation of the sample and crystal.

7. A system according to claim 5, wherein the parameter is the intensity of the radiation reflected back through the crystal, the microscope including a detector for sensing that radiation and the computer is arranged to control movement of the stage such that the sample is returned to a position at which the intensity corresponds to the intensity sensed prior to the separation.

8. A system according to claim 5, wherein the parameter is a spectral characteristic of the radiation reflected back through the crystal.

9. A system according to any one of claims 5 to 8, wherein the microscope has a video camera for viewing a sample on the stage and the display means of the computer is arranged to display a video image of that area viewed by the camera, the computer being arranged to control the display means to create on said display an image of the sample on the microscope stage and to create and superimpose on that image one or more graphical markers which can be used to create coordinate data identifying positions of interest which are used subsequently to position the stage for analysis of the sample, whereby the positions at which an ATR measurement are to be carried out can be identified using the video image and the computer and coordinate data relating to those positions are stored in the memory of the computer, and subsequently, the computer operates the stage automatically so that ATR measurements are carried out successively at each of the identified positions using the automatic technique define above.
